# EUROPÄISCHE PATENTANMELDUNG

(11) **EP 4 512 555 A1**
(43) Veröffentlichungstag der Anmeldung: **26.02.2025**
(21) Anmeldenummer: 24194562.5
(22) Anmeldetag: 14.08.2024
(51) Int. Cl.: B23B 1/00, F16L 19/028

(54) **METALLISCHES FLUIDROHR UND HERSTELLUNGSVERFAHREN**

(30) Priorität: 21.08.2023 DE 102023122300
(71) Anmelder: VERITAS AG, 63571 Gelnhausen (DE)
(72) Erfinder: PASCUZZI, Sergio, 63589 Linsengericht (DE)
(74) Vertreter: Patentship Patentanwaltsgesellschaft mbH

(57) **Zusammenfassung**

Die vorliegende Erfindung betrifft ein metallisches Fluidrohr (100) für eine Fluidverbindungsanordnung (300) umfassend: eine metallische Rohrwandung (101), welche eine Rohrwandungsinnenseite (103) aufweist, welche einen Innenraum (105) des Fluidrohrs (100) begrenzt, und welche eine Rohrwandungsaußenseite (107) aufweist, welche dem Innenraum (105) des Fluidrohrs (100) abgewandt und einem Außenbereich (109) des Fluidrohrs (100) zugewandt ist, wobei die Rohrwandung (101) ein Rohrende (113) mit einer Rohröffnung (115) aufweist, welche den Innenraum (105) des Fluidrohrs (100) mit einem Außenbereich (109) des metallischen Fluidrohrs (100) verbindet, wobei die Rohrwandung (101) eine Erhöhung (117) aufweist, welche die Rohrwandungsaußenseite (107) umläuft und von dem Rohrende (113) beabstandet angeordnet ist, wobei die Rohrwandungsaußenseite (107) eine umlaufende Dichtungsgeometrie (119) aufweist, welche ausgebildet ist eine fluiddichte Verbindung zwischen dem metallischen Fluidrohr (100) und einem weiteren fluidführenden Bauteil (301) der Fluidverbindungsanordnung (300) bereitzustellen, und wobei sich die umlaufende Dichtungsgeometrie (119) an der Rohrwandungsaußenseite (107) von der Erhöhung (117) bis zum Rohrende (113) erstreckt, und wobei die umlaufende Dichtungsgeometrie (119) Drehrillen (121) aufweist, welche sich entlang einer Rillenerstreckungsrichtung (123) erstrecken, wobei die Rillenerstreckungsrichtung (123) quer zu einer Längserstreckungsrichtung (111) des Fluidrohrs (100) verläuft.

## Beschreibung

Die vorliegende Erfindung betrifft ein metallisches Fluidrohr, insbesondere ein metallisches Fluidrohr für eine Fluidverbindungsanordnung, eine Fluidverbindungsanordnung umfassend ein metallisches Fluidrohr, sowie ein Verfahren zum Herstellen eines metallischen Fluidrohrs.

In einem Fahrzeug können unterschiedliche metallische Fluidrohre verbaut werden, um unterschiedliche Arten von Fluid zu leiten. Um entsprechende Fluidrohre in einem räumlich begrenzten Bauraum eines Fahrzeuges mit weiteren fluidführenden Bauteilen zu verbinden, werden Fluidverbindungsanordnungen verwendet, durch welche Fluidverbindungen zwischen dem jeweiligen Fluidrohr und dem jeweiligen weiteren fluidführenden Bauteil hergestellt werden können.

Besonders bei Hochdruckanwendungen, wie z.B. bei der Leitung von gasförmigen Kraftstoffen, beispielsweise bei der Leitung von Wasserstoff, durch entsprechende metallische Fluidrohre werden hohe Anforderungen an die Fluiddichtigkeit zwischen einem entsprechenden Fluidrohr und einem weiteren fluidführenden Bauteil innerhalb der entsprechenden Fluidverbindungsanordnung gestellt.

Es ist die der Erfindung zugrundeliegende Aufgabe, ein metallisches Fluidrohr für eine Fluidverbindungsanordnung bereitzustellen, welches eine hohe Fluiddichtigkeit der Verbindung sicherstellt.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein metallisches Fluidrohr für eine Fluidverbindungsanordnung gelöst, umfassend eine metallische Rohrwandung, welche eine Rohrwandungsinnenseite aufweist, welche einen Innenraum des Fluidrohrs begrenzt, und welche eine Rohrwandungsaußenseite aufweist, welche dem Innenraum des Fluidrohrs abgewandt und einem Außenbereich des Fluidrohrs zugewandt ist, wobei die Rohrwandung ein Rohrende mit einer Rohröffnung aufweist, welche den Innenraum des Fluidrohrs mit einem Außenbereich des metallischen Fluidrohrs verbindet, wobei die Rohrwandung eine Erhöhung aufweist, welche die Rohrwandungsaußenseite umläuft und von dem Rohrende beabstandet angeordnet ist, wobei die Rohrwandungsaußenseite eine umlaufende Dichtungsgeometrie aufweist, welche ausgebildet ist eine fluiddichte Verbindung zwischen dem metallischen Fluidrohr und einem weiteren fluidführenden Bauteil der Fluidverbindungsanordnung bereitzustellen, und wobei sich die umlaufende Dichtungsgeometrie an der Rohrwandungsaußenseite von der Erhöhung bis zum Rohrende erstreckt, und wobei die umlaufende Dichtungsgeometrie Drehrillen aufweist, welche sich entlang einer Rillenerstreckungsrichtung erstrecken, wobei die Rillenerstreckungsrichtung quer zu einer Längserstreckungsrichtung des Fluidrohrs verläuft.

Dies wird im vorliegenden Fall insbesondere dadurch erreicht, dass bei der Herstellung des metallischen Fluidrohrs die Oberfläche des Rohrvorläufers, welche im metallischen Fluidrohr dann die umlaufende Dichtungsgeometrie bildet, mit einem Drehwerkzeug bearbeitet wird, welches Metall abträgt und damit eine entsprechende hohe Qualität der dichtenden Oberfläche sicherstellt. Durch das Drehwerkzeug werden zudem auch die Drehrillen in die umlaufende Dichtungsgeometrie eingeführt, welche die Fluiddichtigkeit der Fluidverbindung nochmals verbessern.

Dadurch wird beispielsweise der technische Vorteil erreicht, dass die Drehrillen, welche die umlaufende Dichtungsgeometrie der metallischen Rohrwandung quer zur Längserstreckungsrichtung des Fluidrohrs umlaufen, eine wirksame Verbesserung der Fluiddichtigkeit der Fluidverbindung zwischen dem metallischen Fluidrohr und dem weiteren fluidführenden Bauteil der Fluidverbindungsanordnung ermöglichen. Dies wird insbesondere dadurch erreicht, dass die Drehrillen leicht erhoben sind, so dass eine hohe Flächenpressung erreicht wird, wodurch eine hohe Dichtwirkung erzielt wird.

Insbesondere umlaufen die Drehrillen die umlaufende Dichtungsgeometrie der metallischen Rohrwandung zumindest abschnittsweise, insbesondere vollständig.

Insbesondere sind die Drehrillen, welche die Dichtungsgeometrie umlaufen, entlang der Längserstreckungsrichtung des Fluidrohrs beabstandet voneinander angeordnet.

Bei einer entsprechenden fluiddichten Ausbildung der entsprechenden Fluidverbindung kommt es nicht nur auf eine gute mechanische Ausbildung der miteinander fluidtechnisch verbundenen Bauteile an, sondern auch auf eine hohe Qualität der dichtenden Oberfläche in Bezug auf Fehlerfreiheit.

Durch die Bearbeitung mit dem Drehwerkzeug beim Herstellen der umlaufenden Dichtungsgeometrie werden zudem noch gegebenenfalls vorhandene Beschädigungen der Oberfläche, wie beispielsweise Schlagstellen entfernt.

Somit kann das metallische Fluidrohr mit der entsprechenden vorteilhaften umlaufenden Dichtungsgeometrie, bzw. die entsprechende Fluidverbindungsanordnung für Hochdruckanwendungen zur Kraftstoffleitung, wie beispielsweise zur Leitung von gasförmigem Wasserstoff vorteilhaft eingesetzt werden.

In einer vorteilhaften Ausführungsform sind die Drehrillen an der gesamten umlaufenden Dichtungsgeometrie angeordnet, und sind die Drehrillen insbesondere zumindest abschnittsweise an der Erhöhung angeordnet.

Dadurch wird der technische Vorteil erreicht, dass über den gesamten Bereich der umlaufenden Dichtungsgeometrie und angrenzender Bereiche, wie beispielsweise der Erhöhung, eine wirksame dichtende Oberfläche erhalten wird.

In einer vorteilhaften Ausführungsform umlaufen die Drehrillen die umlaufende Dichtungsgeometrie zumindest abschnittsweise, insbesondere vollständig.

Dadurch wird der technische Vorteil erreicht, dass die Dichtungswirkung der Drehrillen über einen großen Bereich des Umfangs der umlaufenden Dichtungsgeometrie erreicht wird, insbesondere über den gesamten Umfang.

In einer vorteilhaften Ausführungsform umlaufen die Drehrillen die umlaufende Dichtungsgeometrie spiralförmig, wobei die Drehrillen insbesondere die umlaufende Dichtungsgeometrie von dem Rohrende aus in Richtung der Erhöhung spiralförmig umlaufen.

Dadurch wird der technische Vorteil erreicht, dass ein spiralförmiger Verlauf der Drehrillen, insbesondere von dem Rohrende aus in Richtung der Erhöhung, eine besonders wirksame Struktur auf der umlaufenden Dichtungsgeometrie ermöglicht.

In einer vorteilhaften Ausführungsform bilden die Drehrillen Erhebungen und Vertiefungen in der umlaufenden Dichtungsgeometrie.

Dadurch wird der technische Vorteil erreicht, dass die entsprechenden durch die Drehrillen gebildeten Erhebungen und Vertiefungen die Dichtungswirkung der umlaufenden Dichtungsgeometrie verbessern.

Insbesondere sind die entsprechend nebeneinander angeordneten Erhebungen jeweils durch eine Vertiefung beabstandet und/oder sind die entsprechend nebeneinander angeordneten Vertiefungen jeweils durch eine Erhebung voneinander beabstandet.

In einer vorteilhaften Ausführungsform geht eine dem Rohrende zugewandte Erhöhungsvorderseite der Erhöhung in die umlaufende Dichtungsgeometrie über.

Dadurch wird der technische Vorteil erreicht, dass ein homogener Übergang von der Erhöhung in die umlaufende Dichtungsgeometrie erreicht wird.

In einer vorteilhaften Ausführungsform ist an einer dem Rohrende abgewandten Erhöhungsrückseite der Erhöhung eine rückseitige Stufe und/oder rückseitige Sphäre vorhanden, welche die Erhöhungsrückseite mit einem dem Rohrende abgewandten rückseitigen Bereich der Rohrwandungsaußenseite verbindet.

Dadurch wird der technische Vorteil erreicht, dass die rückseitige Stufe und/oder rückseitige Sphäre an der Erhöhungsrückseite der Erhöhung ein wirksames Anliegen eines Gewindeverbinders der Fluidverbindungsanordnung ermöglicht, so dass das metallische Fluidrohr vorteilhaft mit einem weiteren fluidführenden Bauteil verbunden werden kann.

Durch eine rückseitige Sphäre ist, insbesondere wenn diese zu einer sphärischen Dichtungsfläche konzentrisch ist, eine einfache Kompensation von Lagestreuungen der Achse des Metallrohrs möglich ohne die Dichtwirkung zu beeinträchtigen.

In einer vorteilhaften Ausführungsform weist das Fluidrohr am Rohrende einen Rohrendaußendurchmesser auf, und wobei das Fluidrohr an der Erhöhung einen Erhöhungsaußendurchmesser aufweist, welcher größer als der Rohrendaußendurchmesser ist, wobei sich der Rohraußendurchmesser der umlaufenden Dichtungsgeometrie von dem Erhöhungsaußendurchmesser zu dem Rohrendaußendurchmesser reduziert, insbesondere gleichmäßig reduziert.

Dadurch wird der technische Vorteil erreicht, dass durch den sich von dem Rohrende in Richtung der Erhöhung vergrößernden Außendurchmesser des Fluidrohrs, ein wirksames Anliegen des weiteren fluidführenden Bauteils an der umlaufenden Dichtungsgeometrie erreicht wird.

In einer vorteilhaften Ausführungsform weist das Fluidrohr an einem dem Rohrende abgewandten rückseitigen Bereich der Rohrwandungsaußenseite einen Rückseitenbereichsaußendurchmesser auf, welcher geringer als der Erhöhungsaußendurchmesser ist.

Dadurch wird der technische Vorteil erreicht, dass durch die Verjüngung des Fluidrohrs in dem von dem Rohrende aus gesehenen Bereich hinter der Erhöhung, ein wirksames Hintergreifen der Erhöhung durch einen Gewindeverbinder der Fluidverbindungsanordnung ermöglicht wird.

In einer vorteilhaften Ausführungsform weist die Rohrwandungsinnenseite an dem Rohrende eine die Rohrwandungsinnenseite umlaufende Verjüngung auf, welche sich von dem Rohrende aus zu einem dem Rohrende beabstandeten Bereich der Rohrwandungsinnenseite erstreckt.

Dadurch wird der technische Vorteil erzielt, dass an der Verjüngung Anschlussbauteile fluiddicht angebunden werden können, mit denen ein Überdruck in das Fluidrohres eingebracht werden kann, ohne die spätere Dichtungsgeometrie hierdurch in Mitleidenschaft zu ziehen.

In einer vorteilhaften Ausführungsform ist in einem von dem Rohrende beabstandeten Bereich der Rohrwandungsinnenseite eine die Rohrwandungsinnenseite umlaufende Mulde angeordnet.

Dadurch wird der technische Vorteil erreicht, dass die entsprechende Mulde dadurch entsteht, dass während des Umformvorgangs bei der Herstellung des Fluidrohrs Material von der Rohrwandungsinnenseite zu der Rohrwandungsaußenseite verlagert wird, so dass sich die Erhöhung vorteilhaft an der Rohrwandungsaußenseite ausbildet.

Gemäß einem zweiten Aspekt der Erfindung wird die Aufgabe durch eine Fluidverbindungsanordnung gelöst, umfassend ein metallisches Fluidrohr nach dem ersten Aspekt; ein weiteres fluidführendes Bauteil, welches an der umlaufenden Dichtungsgeometrie des metallischen Fluidrohrs anliegt, wobei das weitere fluidführende Bauteil ein Gewinde aufweist; und einen Gewindeverbinder mit einem zu dem Gewinde des weiteren fluidführenden Bauteils komplementären Gegengewinde, wobei der Gewindeverbinder mit dem weiteren fluidführenden Bauteil durch eine Schraubverbindung verbunden und ausgebildet ist, das weitere fluidführende Bauteil auf die Dichtungsgeometrie des metallischen Fluidrohrs zu pressen, um eine fluiddichte Verbindung zwischen dem metallischen Fluidrohr und dem weiteren fluidführenden Bauteil bereitzustellen.

Dadurch wird der technische Vorteil erreicht, dass durch das Zusammenspiel des Gewindeverbinders mit dem metallischen Fluidrohr und dem weiteren fluidführenden Bauteil eine fluiddichte Fluidverbindungsanordnung erhalten wird.

Gemäß einem dritten Aspekt der Erfindung wird die Aufgabe durch ein Verfahren zum Herstellen eines metallischen Fluidrohrs mit einer umlaufenden Dichtungsgeometrie gelöst, wobei das Verfahren die folgenden Verfahrensschritte umfasst: Bereitstellen eines Rohrvorläufers mit einer metallischen Rohrwandung, welche eine Rohrwandungsinnenseite aufweist, welche einen Innenraum des Rohrvorläufers begrenzt, und welche eine Rohrwandungsaußenseite aufweist, welche dem Innenraum des Rohrvorläufers abgewandt und einem Außenbereich des Rohrvorläufers zugewandt ist, wobei die Rohrwandung ein Rohrende mit einer Rohröffnung aufweist, welche den Innenraum des Rohrvorläufers mit einem Außenbereich des Rohrvorläufers verbindet; Abtragen von Metall an der Rohrwandungsaußenseite der metallischen Rohrwandung in einem sich von dem Rohrende des Rohrvorläufers aus erstreckenden Bereich der Rohrwandungsaußenseite mit einem Drehwerkzeug, Abtragen von Metall an einer das Rohrende begrenzenden Rohrkante der Rohrwandungsaußenseite der metallischen Rohrwandung mit einem Schneidwerkzeug, und Massivumformen des Rohrvorläufers mittels eines Umformwerkzeuges, wobei das metallische Fluidrohr erhalten wird, wobei die Rohrwandung des erhaltenen metallischen Fluidrohrs eine Erhöhung aufweist, welche die Rohrwandungsaußenseite umläuft und von dem Rohrende beabstandet angeordnet ist, wobei die Rohrwandungsaußenseite eine umlaufende Dichtungsgeometrie aufweist, welche ausgebildet ist eine fluiddichte Verbindung zwischen dem metallischen Fluidrohr und einem weiteren fluidführenden Bauteil der Fluidverbindungsanordnung bereitzustellen, und wobei sich die umlaufende Dichtungsgeometrie an der Rohrwandungsaußenseite von der Erhöhung bis zum Rohrende erstreckt, und wobei die umlaufende Dichtungsgeometrie Drehrillen aufweist, welche sich entlang einer Rillenerstreckungsrichtung erstrecken, wobei die Rillenerstreckungsrichtung quer zu einer Längserstreckungsrichtung des Fluidrohrs verläuft.

Dadurch wird der technische Vorteil erreicht, dass ein metallisches Fluidrohr bereitgestellt wird, welches eine besonders vorteilhafte umlaufende Dichtungsgeometrie aufweist.

In einer vorteilhaften Ausführungsform umfasst das Verfahren den weiteren Verfahrensschritt, welcher zwischen dem Abtragen von Metall an der das Rohrende begrenzenden Rohrkante und dem Massivumformen des Rohrvorläufers durchgeführt wird: Einbringen einer umlaufenden Verjüngung in die Rohrwandungsinnenseite an dem Rohrende durch ein weiteres Schneidwerkzeug, wobei sich die umlaufende Verjüngung von dem Rohrende aus zu einem dem Rohrende beabstandeten Bereich der Rohrwandungsinnenseite erstreckt.

Dadurch wird der technische Vorteil erreicht, dass die umlaufende Verjüngung die Fluidverbindung zwischen dem Fluidrohr und dem weiteren fluidführenden Bauteil verbessert.

Dadurch wird der technische Vorteil erzielt, dass an der Verjüngung Anschlussbauteile fluiddicht angebunden werden können, mit denen ein Überdruck in das Fluidrohres eingebracht werden kann, ohne die spätere Dichtungsgeometrie hierdurch in Mitleidenschaft zu ziehen.

In einer vorteilhaften Ausführungsform umfasst das Abtragen von Metall an der Rohrwandungsaußenseite der metallischen Rohrwandung, das Abtragen von Metall an einer das Rohrende begrenzenden Rohrkante, und wobei insbesondere das Einbringen einer umlaufenden Verjüngung in die Rohrwandungsinnenseite an dem Rohrende zeitlich aufeinanderfolgend durch eine Werkzeugvorrichtung durchgeführt wird, welche das Drehwerkzeug, das Schneidwerkzeug und insbesondere auch das weitere Schneidwerkzeug umfasst.

Dadurch wird der technische Vorteil erreicht, dass die Werkzeugvorrichtung eine vorteilhafte Integration von mehreren Verfahrensschritten mittels eines Bauteils ermöglicht.

Die in Bezug auf das metallische Fluidrohr gemäß dem ersten Aspekt angeführten vorteilhaften Ausführungsformen gelten ebenso als vorteilhafte Ausführungsformen für die Fluidverbindunganordnung gemäß dem zweiten Aspekt und für das Verfahren gemäß dem dritten Aspekt.

Ebenso gelten die vorteilhafte Ausführungsformen des Verfahrens gemäß dem dritten Aspekt als vorteilhafte Ausführungsformen für das metallische Fluidrohr gemäß dem ersten Aspekt und für die Fluidverbindungsanordnung gemäß dem zweiten Aspekt.

Ausführungsbeispiele der Erfindung sind in den Zeichnungen dargestellt und werden im Folgenden näher beschrieben.

Es zeigen:
- Figur 1: eine perspektivische Ansicht eines metallischen Fluidrohrs gemäß einer Ausführungsform der vorliegenden Erfindung;
- Figur 2: eine vergrößerte Ansicht einer umlaufenden Dichtungsgeometrie des in Fig. 1 dargestellten metallischen Fluidrohrs gemäß einer Ausführungsform der vorliegenden Erfindung;
- Figur 3: eine Ansicht einer Fluidverbindungsanordnung umfassend ein metallisches Fluidrohr gemäß der Figur 1 und Figur 2, welche mit einem weiteren fluidführenden Bauteil verbunden ist;
- Figur 4: ein Verfahren zum Herstellen eines metallischen Fluidrohrs gemäß einer Ausführungsform;
- Figuren 5A, 5B: einen Rohrvorläufer vor, bzw. nach dem Abtragen von Metall gemäß einer Ausführungsform; und
- Figur 6: eine schematische Ansicht eines Abtragens von Metall von einem Rohrvorläufer mittels eines Drehwerkzeugs gemäß einer Ausführungsform.

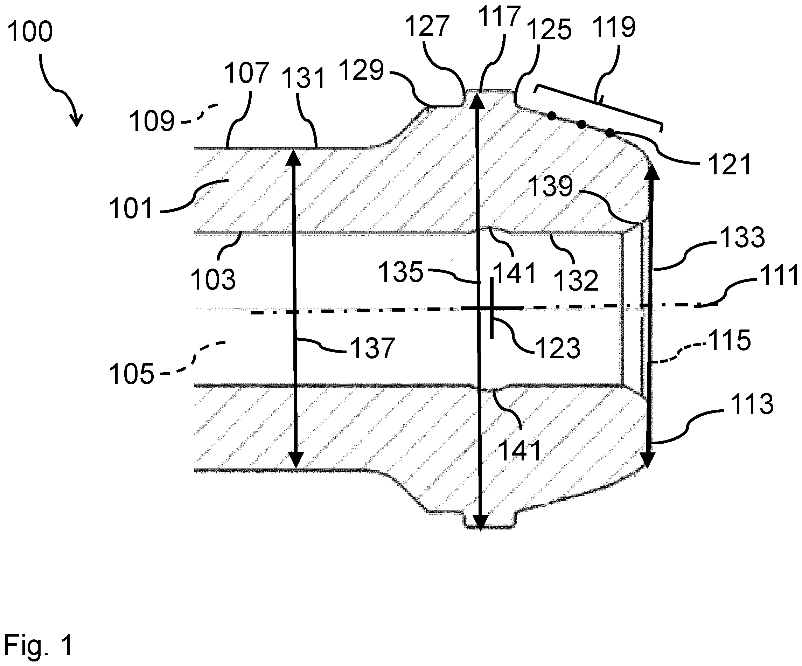

Die Figur 1 zeigt eine perspektivische Ansicht eines metallischen Fluidrohrs gemäß einer Ausführungsform der vorliegenden Erfindung.

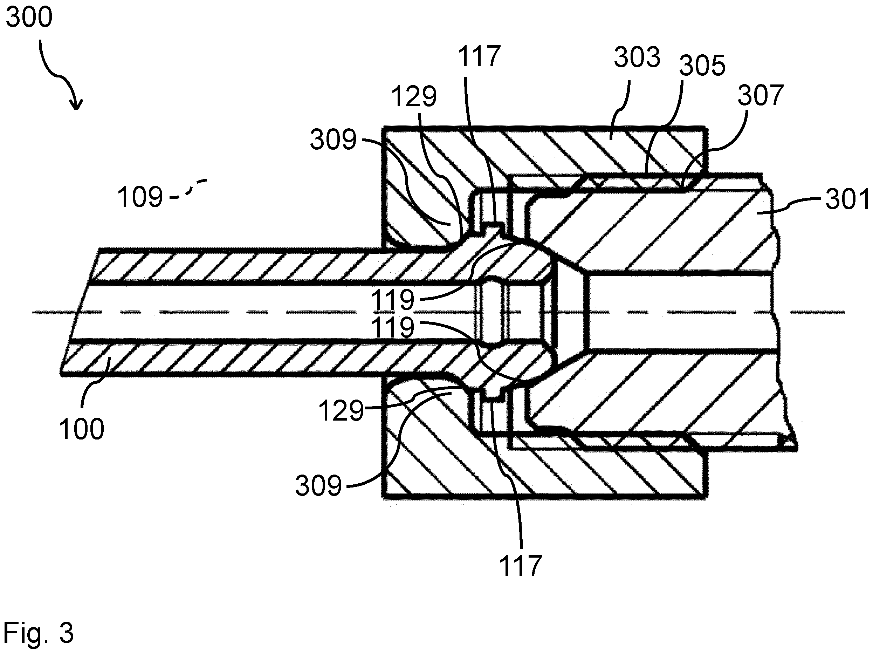

Dass metallische Fluidrohr 100 wird im Rahmen einer fluiddichten und in Figur 3 dargestellten Fluidverbindungsanordnung eingesetzt. Insbesondere wird das metallische Fluidrohr 100 in einem Fahrzeug zum Leiten von unter Druck stehenden Fluiden, insbesondere von Gasen, insbesondere von Wasserstoff eingesetzt.

Das metallische Fluidrohr 100 besteht aus einem Metall, insbesondere aus Eisen oder Stahl.

Das metallisches Fluidrohr 100 umfasst eine metallische Rohrwandung 101, welche eine Rohrwandungsinnenseite 103 aufweist, welche einen Innenraum 105 des Fluidrohrs 100 begrenzt, und welche eine Rohrwandungsaußenseite 107 aufweist, welche dem Innenraum 105 des Fluidrohrs 100 abgewandt und einem Außenbereich 109 des Fluidrohrs 100 zugewandt ist. Das metallische Fluidrohr 100 erstreckt sich entlang einer Längserstreckungsrichtung 111.

Die Rohrwandung 101 weist ein Rohrende 113 mit einer Rohröffnung 115 auf, welche den Innenraum 105 des Fluidrohrs 100 mit dem Außenbereich 109 des metallischen Fluidrohrs 100 verbindet.

Die Rohrwandung 101 weist eine Erhöhung 117 auf, welche die Rohrwandungsaußenseite 107 umläuft und von dem Rohrende 113 beabstandet angeordnet ist.

Die Rohrwandungsaußenseite 107 weist eine umlaufende Dichtungsgeometrie 119 auf, welche ausgebildet ist eine fluiddichte Verbindung zwischen dem metallischen Fluidrohr 100 und einem weiteren in Figur 1 nicht dargestellten fluidführenden Bauteil der Fluidverbindunganordnung bereitzustellen. Die umlaufende Dichtungsgeometrie 119 erstreckt sich an der Rohrwandungsaußenseite 107 von der Erhöhung 117 bis zum Rohrende 113.

Auch wenn dies in der Figur 1 nur schematisch dargestellt ist, weist die umlaufende Dichtungsgeometrie 119 Drehrillen 121 auf, welche sich entlang einer Rillenerstreckungsrichtung 123 erstrecken, wobei die Rillenerstreckungsrichtung 123 quer zu einer Längserstreckungsrichtung 111 des Fluidrohrs 100 verläuft.

Auch wenn dies in Figur 1 nicht ersichtlich ist, sind die Drehrillen 121 an der gesamten umlaufende Dichtungsgeometrie 119 angeordnet.

Insbesondere umlaufen die Drehrillen 121 die umlaufende Dichtungsgeometrie 119 zumindest abschnittsweise, insbesondere vollständig

Insbesondere umlaufen die Drehrillen 121 die umlaufende Dichtungsgeometrie 119 spiralförmig, insbesondere umlaufen die Drehrillen 121 die umlaufende Dichtungsgeometrie 119 von dem Rohrende 113 aus in Richtung der Erhöhung 117 spiralförmig.

Insbesondere bilden die Drehrillen 121 Erhebungen und Vertiefungen in der umlaufenden Dichtungsgeometrie 119.

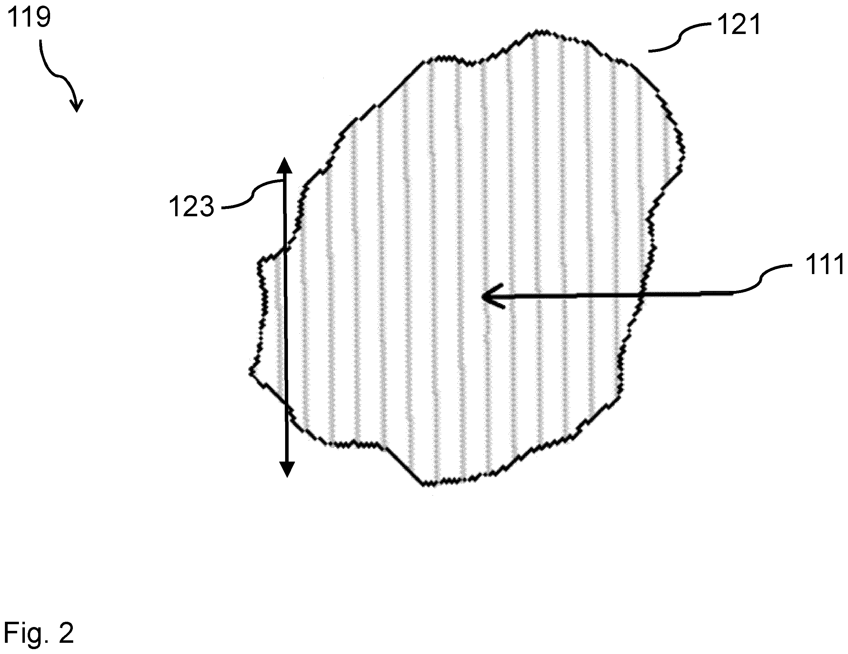

In Bezug auf die weiteren Details der in Figur 1 dargestellten umlaufenden Dichtungsgeometrie 119 wird auf die Darstellung in der Figur 2 verwiesen.

Wie aus der Figur 1 hervorgeht, geht eine dem Rohrende 113 zugewandte Erhöhungsvorderseite 125 der Erhöhung 117 in die umlaufende Dichtungsgeometrie 119 über.

Wie aus der Figur 1 hervorgeht, ist an einer dem Rohrende 113 abgewandten Erhöhungsrückseite 127 der Erhöhung 117 eine rückseitige Stufe 129 vorhanden, welche die Erhöhungsrückseite 127 mit einem dem Rohrende 113 abgewandten rückseitigen Bereich 131 der Rohrwandungsaußenseite 107 verbindet.

Das Fluidrohr 100 weist am Rohrende 113 einen Rohrendaußendurchmesser 133 auf. Das Fluidrohr 100 weist an der Erhöhung 117 einen Erhöhungsaußendurchmesser 135 auf, welcher größer als der Rohrendaußendurchmesser 133 ist, wobei sich der Rohraußendurchmesser der umlaufenden Dichtungsgeometrie 119 von dem Erhöhungsaußendurchmesser 135 zu dem Rohrendaußendurchmesser 133 reduziert, insbesondere gleichmäßig reduziert.

Das Fluidrohr 100 weist an einem dem Rohrende 113 abgewandten rückseitigen Bereich 131 der Rohrwandungsaußenseite 107 einen Rückseitenbereichsaußendurchmesser 137 auf, welcher geringer als der Erhöhungsaußendurchmesser 135 ist.

Die Rohrwandungsinnenseite 103 weist an dem Rohrende 113 eine die Rohrwandungsinnenseite 103 umlaufende Verjüngung 139 auf, welche sich von dem Rohrende 113 aus zu einem dem Rohrende 113 beabstandeten Bereich 132 der Rohrwandungsinnenseite 103 erstreckt.

In dem von dem Rohrende 113 beabstandeten Bereich 132 der Rohrwandungsinnenseite 103 ist eine die Rohrwandungsinnenseite 103 umlaufende Mulde 141 angeordnet.

Figur 2 zeigt eine vergrößerte Ansicht einer umlaufenden Dichtungsgeometrie des in Figur 1 dargestellten metallischen Fluidrohrs gemäß einer Ausführungsform der vorliegenden Erfindung.

In der Figur 2 ist eine schematische Darstellung eines Ausschnitts einer an der Rohrwandungsaußenseite 107 zwischen der Erhöhung 117 und dem Rohrende 113 angeordneten umlaufenden Dichtungsgeometrie 119 des in Figur 1 dargestellten metallischen Fluidrohrs 100 gezeigt.

In der Figur 2 ist die Längserstreckungsrichtung 111 des Fluidrohrs 100 schematisch dargestellt. Wie in der Figur 2 dargestellt ist, erstrecken sich die an der umlaufenden Dichtungsgeometrie 119 angeordneten Drehrillen 121 entlang der Rillenerstreckungsrichtung 123 quer zur Längserstreckungsrichtung 111 des Fluidrohrs 100.

Aus der Figur 2 ist zu erkennen, dass die Drehrillen 121 voneinander beabstandet an der umlaufenden Dichtungsgeometrie 119 angeordnet sind.

Auch wenn in der Figur 2 nur ein Ausschnitt der umlaufenden Dichtungsgeometrie 119 des Fluidrohrs 100 gezeigt ist, umlaufen die Drehrillen 121 die umlaufende Dichtungsgeometrie 119 zumindest abschnittsweise, insbesondere vollständig.

Figur 3 zeigt eine Ansicht einer Fluidverbindungsanordnung umfassend ein metallisches Fluidrohr gemäß der Figur 1 und Figur 2, welche mit einem weiteren fluidführenden Bauteil verbunden ist.

In der Figur 3 ist das bereits in den Figuren 1 und 2 dargestellte metallische Fluidrohr 100 der Fluidverbindungsanordnung 300 gezeigt, wobei hier auf die umfangreichen Ausführungen zu den Figuren 1 und 2 verwiesen wird, und wobei aus Übersichtlichkeitsgründen in der Figur 3 lediglich die umlaufende Dichtungsgeometrie 119 des metallischen Fluidrohrs 100 markiert ist.

Die in Figur 3 dargestellte Fluidverbindungsanordnung 300 weist ein weiteres fluidführendes Bauteil 301 auf, welches an der umlaufenden Dichtungsgeometrie 119 des metallischen Fluidrohrs 100 anliegt.

Um eine fluiddichte Verbindung zwischen dem metallischen Fluidrohr 100 und dem weiteren fluidführenden Bauteil 301 innerhalb der Fluidverbindungsanordnung 300 zu erreichen, müssen das metallische Fluidrohr 100 und das fluidführende Bauteil 301 aneinander gepresst werden.

Dies wird durch einen in Figur 3 dargestellten Gewindeverbinder 303 der Fluidverbindungsanordnung 300 erreicht. Der Gewindeverbinder 303 weist in einem dem weiteren fluidführenden Bauteil 301 zugewandten Bereich ein in Figur 3 nur schematisch dargestelltes Gegengewinde 305 auf, welches komplementär zu einem in Figur 3 nur schematisch dargestellten Gewinde 307 in einem dem Gewindeverbinder 303 zugewandten Bereich des weiteren fluidführenden Bauteil 301 ist. Dadurch kann der Gewindeverbinder 303 im Rahmen einer Schraubverbindung auf das weitere fluidführende Bauteil 301 aufgeschraubt werden.

Der Gewindeverbinder 303 weist ferner einen Pressbereich 309 auf, welcher die in Figur 3 dargestellte Erhöhung 117 des metallischen Fluidrohrs 100 hintergreift, insbesondere die rückseitige Stufe 129 der Erhöhung 117.

Beim Aufschrauben des Gewindeverbinders 303 auf das weitere fluidführende Bauteil 301 wird somit der Pressbereich 309 des Gewindeverbinders 303 gegen das metallische Fluidrohr 100 gepresst, so dass eine Pressverbindung zwischen der Dichtungsgeometrie 119 des metallischen Fluidrohrs 100 und dem weiteren fluidführenden Bauteil 301 erhalten wird, und dadurch eine fluiddichte Verbindung zwischen dem metallischen Fluidrohr 100 und dem weiteren fluidführenden Bauteil 301 bereitgestellt wird.

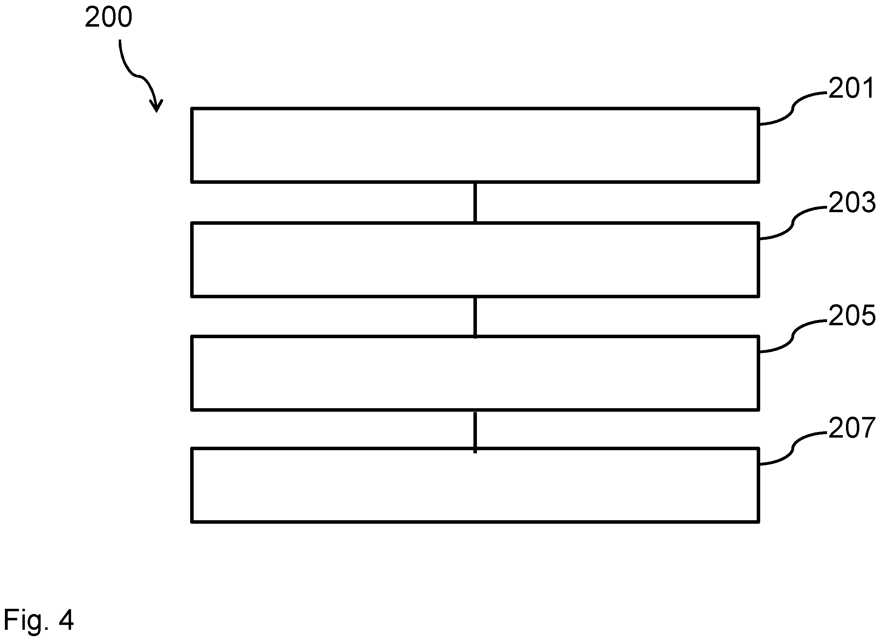

Figur 4 zeigt ein Verfahren zum Herstellen eines metallischen Fluidrohrs gemäß einer Ausführungsform.

Das Verfahren 200 umfasst als ersten Verfahrensschritt das Bereitstellen 201 eines Rohrvorläufers 143 mit einer metallischen Rohrwandung 101 welche eine Rohrwandungsinnenseite 103 aufweist, welche einen Innenraum 105 des Rohrvorläufers 143 begrenzt, und welche eine Rohrwandungsaußenseite 107 aufweist, welche dem Innenraum 105 des Rohrvorläufers 143 abgewandt und einem Außenbereich 109 des Rohrvorläufers 143 zugewandt ist, wobei die Rohrwandung 101 ein Rohrende 113 mit einer Rohröffnung 115 aufweist, welche den Innenraum 105 des Rohrvorläufers 143 mit einem Außenbereich 109 des Rohrvorläufers 143 verbindet.

Das Verfahren 200 umfasst als zweiten Verfahrensschritt das Abtragen 203 von Metall an der Rohrwandungsaußenseite 107 der metallischen Rohrwandung 101 in einem sich von dem Rohrende 113 des Rohrvorläufers 143 aus erstreckenden Bereich 131 der Rohrwandungsaußenseite 107 mit einem Drehwerkzeug 151.

Das Verfahren 200 umfasst als dritten Verfahrensschritt das Abtragen 205 von Metall an einer das Rohrende 113 begrenzenden Rohrkante der Rohrwandungsaußenseite 107 der metallischen Rohrwandung 101 mit einem Schneidwerkzeug.

Das Verfahren 200 umfasst als vierten Verfahrensschritt das Massivumformen 207 des Rohrvorläufers 143 mittels eines Umformwerkzeuges, wobei das metallische Fluidrohr 100 erhalten wird, wobei die Rohrwandung 101 des erhaltenen metallischen Fluidrohrs 100 eine Erhöhung 117 aufweist, welche die Rohrwandungsaußenseite 107 umläuft und von dem Rohrende 113 beabstandet angeordnet ist, wobei die Rohrwandungsaußenseite 107 eine umlaufende Dichtungsgeometrie 119 aufweist, welche ausgebildet ist eine fluiddichte Verbindung zwischen dem metallischen Fluidrohr 100 und einem weiteren fluidführenden Bauteil 301 bereitzustellen, und wobei sich die umlaufende Dichtungsgeometrie 119 an der Rohrwandungsaußenseite 107 von der Erhöhung 117 bis zum Rohrende 113 erstreckt, und wobei die umlaufende Dichtungsgeometrie 119 Drehrillen 121 aufweist, welche sich entlang einer Rillenerstreckungsrichtung 123 erstrecken, wobei die Rillenerstreckungsrichtung 123 quer zu einer Längserstreckungsrichtung 111 des Fluidrohrs 100 verläuft.

Insbesondere umfasst das Verfahren den weiteren Verfahrensschritt, welcher zwischen dem Abtragen 205 von Metall an der das Rohrende 113 begrenzenden Rohrkante und dem Massivumformen 207 des Rohrvorläufers 143 durchgeführt wird: Einbringen einer umlaufenden Verjüngung 139 in die Rohrwandungsinnenseite 103 an dem Rohrende 113 durch ein weiteres Schneidwerkzeug, wobei sich die umlaufende Verjüngung 139 von dem Rohrende 113 aus zu einem dem Rohrende 113 beabstandeten Bereich 132 der Rohrwandungsinnenseite 103 erstreckt.

Insbesondere wird das Abtragen 203 von Metall an der Rohrwandungsaußenseite 107 der metallischen Rohrwandung 101, das Abtragen 205 von Metall an einer das Rohrende 113 begrenzenden Rohrkante, und insbesondere das Einbringen einer umlaufenden Verjüngung 139 in die Rohrwandungsinnenseite 103 an dem Rohrende 113 zeitlich aufeinanderfolgend durch eine Werkzeugvorrichtung durchgeführt, welche das Drehwerkzeug 151, das Schneidwerkzeug und insbesondere auch das weitere Schneidwerkzeug umfasst. Somit können das Drehwerkzeug 151, das Schneidwerkzeug und insbesondere auch das weitere Schneidwerkzeug vorteilhaft in der Werkzeugvorrichtung integriert werden.

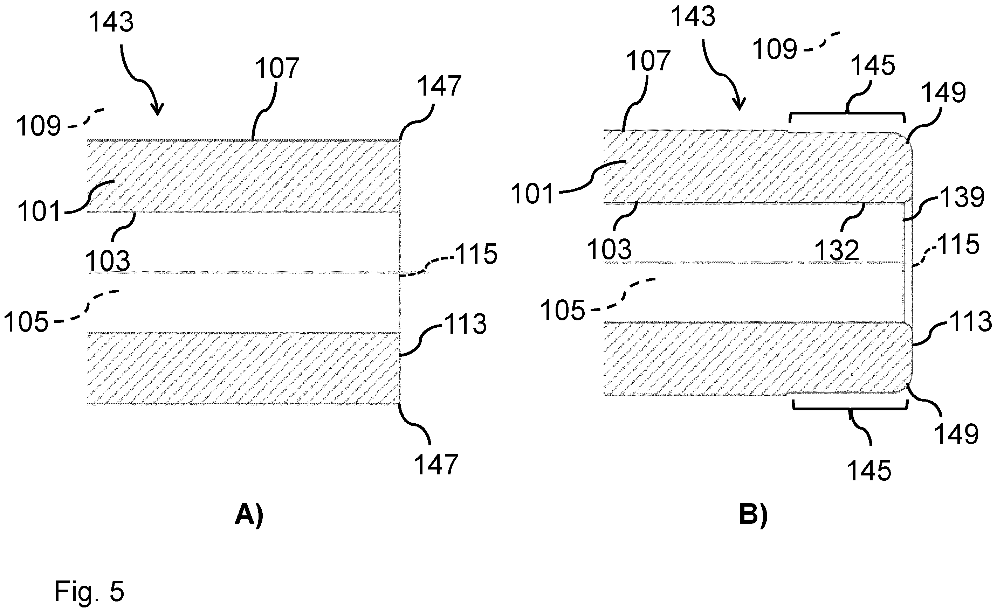

Die Figuren 5A und 5B zeigen einen Rohrvorläufer vor, bzw. nach dem Abtragen von Metall gemäß einer Ausführungsform.

In der Fig. 5A ist ein Rohrvorläufer 143 gemäß einer Ausführungsform gezeigt, welcher gemäß dem in Figur 4 beschriebenen Verfahren 200 zum Herstellen eines metallischen Fluidrohrs 100 zu Beginn des Herstellungsvorgangs bereitgestellt wird.

Der Rohrvorläufer 143 weist eine metallische Rohrwandung 101 auf, welche wiederum eine Rohrwandungsinnenseite 103 aufweist, welche einen Innenraum 105 des Rohrvorläufers 143 begrenzt, und welche eine Rohrwandungsaußenseite 107 aufweist, welche dem Innenraum 105 des Rohrvorläufers 143 abgewandt und einem Außenbereich 109 des Rohrvorläufers 143 zugewandt ist. Die Rohrwandung 101 weist ein Rohrende 113 mit einer Rohröffnung 115 auf, welche den Innenraum 105 des Rohrvorläufers 143 mit dem Außenbereich 109 des Rohrvorläufers 143 verbindet.

Nach dem Bereitstellen 201 des Rohrvorläufers 143 gemäß dem in Figur 4 beschriebenen Verfahren 200 folgt als nächster Verfahrensschritt das Abtragen 203 von Metall an der Rohrwandungsaußenseite 107 der metallischen Rohrwandung 101 in einem sich von dem Rohrende 113 des Rohrvorläufers 143 aus erstreckenden Bereich 145 der Rohrwandungsaußenseite 107 mit einem Drehwerkzeug 151, wobei der entsprechende Bereich 145 in dem in Figur 5B dargestellten Rohrvorläufer 143 hervorgehoben ist.

Das Drehwerkzeug 151 umfasst hierbei insbesondere einen Drehmeißel, insbesondere mit einer formlosen Schneide 155, durch welchen in dem entsprechenden Bereich 145 Metall abgetragen wird und eine neue Oberfläche bereitgestellt wird, welche am Ende des Herstellungsverfahrens der umlaufenden Dichtungsgeometrie 119 des metallischen Fluidrohrs 100 entspricht.

Durch das Abtragen von Metall durch das Drehwerkzeug 151 werden in dem entsprechenden Bereich 145 die bereits in Bezug auf die Figuren 1 und 2 im Detail beschriebenen Drehrillen 121 eingeführt, welche in der entsprechenden umlaufenden Dichtungsgeometrie 119 des metallischen Fluidrohrs 100 eine entsprechende fluiddichte Verbindung des metallischen Fluidrohrs 100 mit dem weiteren fluidführenden Bauteil 301 sicherstellen.

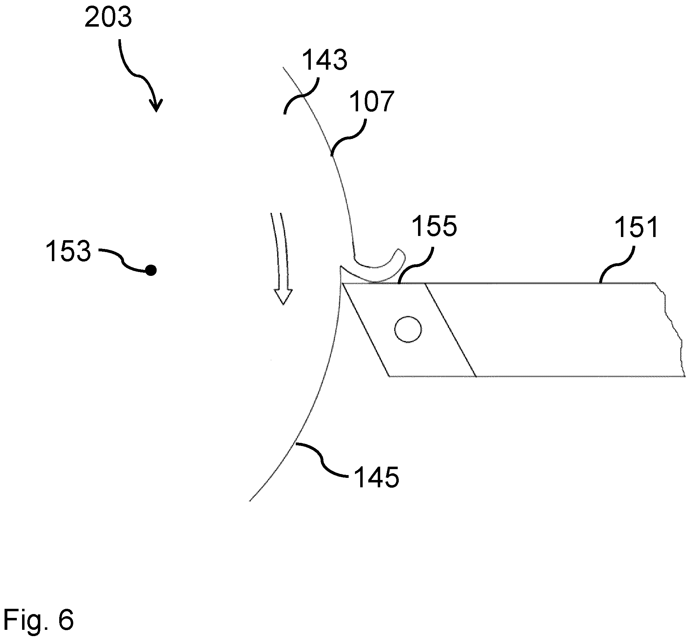

Für weitere Details hinsichtlich des Abtragens von Metall mittels des Drehwerkzeugs 151 wird auf die nachfolgenden Ausführungen der Figur 6 verwiesen.

Gemäß dem in Figur 4 beschriebenen Verfahren 200 folgt anschließend der nächste Verfahrensschritt umfassend das Abtragen 205 von Metall an einer das Rohrende 113 begrenzenden Rohrkante 147 der Rohrwandungsaußenseite 107 der metallischen Rohrwandung 101 mit einem Schneidwerkzeug. Die entsprechende Rohrkante 147 ist in der Figur 5A dargestellt. Und der entsprechende abgerundete Bereich 149 der abgetragenen Rohrkante 147 ist in der Figur 5B schematisch dargestellt.

Das Schneidwerkzeug umfasst insbesondere eine formgebundene Schneide durch welche ein spanabhebendes Verfahren ermöglicht wird.

Auch wenn dies in Figur 4 nicht dargestellt ist, folgt anschließend als nächster, optionaler, Verfahrensschritt das Einbringen einer umlaufenden Verjüngung 139 in die Rohrwandungsinnenseite 103 an dem Rohrende 113 durch ein weiteres Schneidwerkzeug, wobei sich die umlaufende Verjüngung 139 von dem Rohrende 113 aus zu einem dem Rohrende 113 beabstandeten Bereich 132 der Rohrwandungsinnenseite 103 erstreckt. Die umlaufende Verjüngung 139 in dem Rohrvorläufer 143 ist in der Figur 5B dargestellt.

Anschließend folgt als letzter gemäß der Figur 4 beschriebener Verfahrensschritt das Massivumformen 207 des in Figur 5B dargestellten Rohrvorläufers 143 mittels eines Umformwerkzeuges, wobei das in Figur 1 dargestellte metallische Fluidrohr 100 erhalten wird.

Figur 6 zeigt eine schematische Ansicht eines Abtragens von Metall von einem Rohrvorläufer mittels eines Drehwerkzeugs gemäß einer Ausführungsform.

In der Figur 6 ist der in Figur 4 lediglich schematisch dargestellte zweite Verfahrensschritt des Herstellungsverfahrens 200 des metallischen Fluidrohrs 100 gezeigt, welcher umfasst: das Abtragen 203 von Metall an der Rohrwandungsaußenseite 107 der metallischen Rohrwandung 101 in einem sich von dem Rohrende 113 des Rohrvorläufers 143 aus erstreckenden Bereich 145 der Rohrwandungsaußenseite 107 mit einem Drehwerkzeug 151.

Wie in der Figur 6 lediglich schematisch dargestellt ist, rotiert der Rohrvorläufer 143 um eine Rotationsachse 153 und das Drehwerkzeug 151 mit einer formlosen Schneide 155 fährt parallel zur Rotationsachse 153 entlang der Rohrwandungsaußenseite 107 der metallischen Rohrwandung 101 und schneidet in dem sich von dem Rohrende 113 des Rohrvorläufers 143 aus erstreckenden Bereich 145 eine neue Oberfläche heraus.

Die neue Oberfläche in dem Bereich 145 weist aufgrund des Kontakts mit dem Drehwerkzeug 151 entsprechende in Figur 6 nicht dargestellte Drehrillen 121 auf, welche sich entlang einer Rillenerstreckungsrichtung 123 erstrecken, welche orthogonal zur Längsstreckungsrichtung 117 des Rohrvorläufers 143 verläuft.

Die neue Oberfläche mit den Drehrillen 121 in dem Bereich 145 stellt die umlaufende Dichtungsgeometrie 119 in dem metallischen Fluidrohr 100 bereit.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Metallisches Fluidrohr
- 101: Metallische Rohrwandung
- 103: Rohrwandungsinnenseite
- 105: Innenraum des Fluidrohrs
- 107: Rohrwandungsaußenseite
- 109: Außenbereich des Fluidrohrs
- 111: Längserstreckungsrichtung des Fluidrohrs
- 113: Rohrende
- 115: Rohröffnung
- 117: Erhöhung
- 119: Umlaufende Dichtungsgeometrie
- 121: Drehrillen
- 123: Rillenerstreckungsrichtung
- 125: Erhöhungsvorderseite
- 127: Erhöhungsrückseite
- 129: Rückseitige Stufe
- 131: Rückseitiger Bereich der Rohrwandungsaußenseite
- 132: Von dem Rohrende beabstandeter Bereich der Rohrwandungsinnenseite
- 133: Rohrendaußendurchmesser
- 135: Erhöhungsaußendurchmesser
- 137: Rückseitenbereichsaußendurchmesser
- 139: Verjüngung
- 141: Mulde
- 143: Rohrvorläufer
- 145: Sich von dem Rohrende des Rohrvorläufers aus erstreckenden Bereich der Rohrwandungsaußenseite
- 147: Rohrkante
- 149: Abgerundeter Bereich der abgetragenen Rohrkante
- 151: Drehwerkzeug
- 153: Rotationsachse des Rohrvorläufers
- 155: Formlosen Schneide des Drehwerkzeugs
- 200: Verfahren zum Herstellen eines metallischen Fluidrohrs
- 201: Erster Verfahrensschritt: Bereitstellen eines Rohrvorläufers
- 203: Zweiter Verfahrensschritt: Abtragen von Metall mit einem Drehwerkzeug
- 205: Dritter Verfahrensschritt: Abtragen von Metall mit einem Schneidwerkzeug
- 207: Vierter Verfahrensschritt: Massivumformen des Rohrvorläufers
- 300: Fluidverbindunganordnung
- 301: Weiteres fluidführendes Bauteil
- 303: Gewindeverbinder
- 305: Gegengewinde des Gewindeverbinders
- 307: Gewinde des weiteren fluidführenden Bauteils
- 309: Pressbereich des Gewindeverbinders

## Patentansprüche

1. Metallisches Fluidrohr (100) für eine Fluidverbindungsanordnung (300) umfassend:
eine metallische Rohrwandung (101), welche eine Rohrwandungsinnenseite (103) aufweist, welche einen Innenraum (105) des Fluidrohrs (100) begrenzt, und welche eine Rohrwandungsaußenseite (107) aufweist, welche dem Innenraum (105) des Fluidrohrs (100) abgewandt und einem Außenbereich (109) des Fluidrohrs (100) zugewandt ist,
wobei die Rohrwandung (101) ein Rohrende (113) mit einer Rohröffnung (115) aufweist, welche den Innenraum (105) des Fluidrohrs (100) mit einem Außenbereich (109) des metallischen Fluidrohrs (100) verbindet,
wobei die Rohrwandung (101) eine Erhöhung (117) aufweist, welche die Rohrwandungsaußenseite (107) umläuft und von dem Rohrende (113) beabstandet angeordnet ist,
wobei die Rohrwandungsaußenseite (107) eine umlaufende Dichtungsgeometrie (119) aufweist, welche ausgebildet ist eine fluiddichte Verbindung zwischen dem metallischen Fluidrohr (100) und einem weiteren fluidführenden Bauteil (301) der Fluidverbindungsanordnung (300) bereitzustellen, und wobei sich die umlaufende Dichtungsgeometrie (119) an der Rohrwandungsaußenseite (107) von der Erhöhung (117) bis zum Rohrende (113) erstreckt, und
wobei die umlaufende Dichtungsgeometrie (119) Drehrillen (121) aufweist, welche sich entlang einer Rillenerstreckungsrichtung (123) erstrecken, wobei die Rillenerstreckungsrichtung (123) quer zu einer Längserstreckungsrichtung (111) des Fluidrohrs (100) verläuft.

2. Metallisches Fluidrohr (100) nach Anspruch 1, wobei die Drehrillen (121) an der gesamten umlaufende Dichtungsgeometrie (119) angeordnet sind, und wobei insbesondere die Drehrillen (121) zumindest abschnittsweise an der Erhöhung (117) angeordnet sind.

3. Metallisches Fluidrohr (100) nach Anspruch 1 oder 2, wobei die Drehrillen (121) die umlaufende Dichtungsgeometrie (119) zumindest abschnittsweise, insbesondere vollständig, umlaufen.

4. Metallisches Fluidrohr (100) nach einem der vorangehenden Ansprüche, wobei die Drehrillen (121) die umlaufende Dichtungsgeometrie (119) spiralförmig umlaufen, insbesondere die umlaufende Dichtungsgeometrie (119) von dem Rohrende (113) aus in Richtung der Erhöhung (117) spiralförmig umlaufen.

5. Metallisches Fluidrohr (100) nach einem der vorangehenden Ansprüche, wobei die Drehrillen (121) Erhebungen und Vertiefungen in der umlaufenden Dichtungsgeometrie (119) bilden.

6. Metallisches Fluidrohr (100) nach einem der vorangehenden Ansprüche, wobei eine dem Rohrende (113) zugewandte Erhöhungsvorderseite (125) der Erhöhung (117) in die umlaufende Dichtungsgeometrie (119) übergeht.

7. Metallisches Fluidrohr (100) nach einem der vorangehenden Ansprüche, wobei an einer dem Rohrende (113) abgewandten Erhöhungsrückseite (127) der Erhöhung (117) eine rückseitige Stufe (129) und/oder rückseitige Sphäre vorhanden ist, welche die Erhöhungsrückseite (127) mit einem dem Rohrende (113) abgewandten rückseitigen Bereich (131) der Rohrwandungsaußenseite (107) verbindet.

8. Metallisches Fluidrohr (100) nach einem der vorangehenden Ansprüche, wobei das Fluidrohr (100) am Rohrende (113) einen Rohrendaußendurchmesser (133) aufweist, und wobei das Fluidrohr (100) an der Erhöhung (117) einen Erhöhungsaußendurchmesser (135) aufweist, welcher größer als der Rohrendaußendurchmesser (133) ist, wobei sich der Rohraußendurchmesser der umlaufenden Dichtungsgeometrie (119) von dem Erhöhungsaußendurchmesser (135) zu dem Rohrendaußendurchmesser (133) reduziert, insbesondere gleichmäßig reduziert.

9. Metallisches Fluidrohr (100) nach Anspruch 8, wobei das Fluidrohr (100) an einem dem Rohrende (113) abgewandten rückseitigen Bereich (131) der Rohrwandungsaußenseite (107) einen Rückseitenbereichsaußendurchmesser (137) aufweist, welcher geringer als der Erhöhungsaußendurchmesser (135) ist.

10. Metallisches Fluidrohr (100) nach einem der vorangehenden Ansprüche, wobei die Rohrwandungsinnenseite (103) an dem Rohrende (113) eine die Rohrwandungsinnenseite (103) umlaufende Verjüngung (139) aufweist, welche sich von dem Rohrende (113) aus zu einem dem Rohrende (113) beabstandeten Bereich (132) der Rohrwandungsinnenseite (103) erstreckt.

11. Metallisches Fluidrohr (100) nach einem der vorangehenden Ansprüche, wobei in einem von dem Rohrende (113) beabstandeten Bereich (132) der Rohrwandungsinnenseite (103) eine die Rohrwandungsinnenseite (103) umlaufende Mulde (141) angeordnet ist.

12. Fluidverbindungsanordnung (300) umfassend ein metallisches Fluidrohr (100) nach einem der vorangehenden Ansprüche;
ein weiteres fluidführendes Bauteil (301), welches an der umlaufenden Dichtungsgeometrie (119) des metallischen Fluidrohrs (100) anliegt, wobei das weitere fluidführende Bauteil (301) ein Gewinde (307) aufweist; und
einen Gewindeverbinder (303) mit einem zu dem Gewinde (307) des weiteren fluidführenden Bauteils (301) komplementären Gegengewinde (305), wobei der Gewindeverbinder (303) mit dem weiteren fluidführenden Bauteil (301) durch eine Schraubverbindung verbunden und ausgebildet ist, das weitere fluidführende Bauteil (301) auf die Dichtungsgeometrie (119) des metallischen Fluidrohrs (100) zu pressen, um eine fluiddichte Verbindung zwischen dem metallischen Fluidrohr (100) und dem weiteren fluidführenden Bauteil (301) bereitzustellen.

13. Verfahren (200) zum Herstellen eines metallischen Fluidrohrs (100) mit einer umlaufenden Dichtungsgeometrie (119), wobei das Verfahren die folgenden Verfahrensschritte umfasst:
Bereitstellen (201) eines Rohrvorläufers (143) mit einer metallischen Rohrwandung (101), welche eine Rohrwandungsinnenseite (103) aufweist, welche einen Innenraum (105) des Rohrvorläufers (143) begrenzt, und welche eine Rohrwandungsaußenseite (107) aufweist, welche dem Innenraum (105) des Rohrvorläufers (143) abgewandt und einem Außenbereich (109) des Rohrvorläufers (143) zugewandt ist, wobei die Rohrwandung (101) ein Rohrende (113) mit einer Rohröffnung (115) aufweist, welche den Innenraum (105) des Rohrvorläufers (143) mit einem Außenbereich (109) des Rohrvorläufers (143) verbindet,
Abtragen (203) von Metall an der Rohrwandungsaußenseite (107) der metallischen Rohrwandung (101) in einem sich von dem Rohrende (113) des Rohrvorläufers (143) aus erstreckenden Bereich (145) der Rohrwandungsaußenseite (107) mit einem Drehwerkzeug (151),
Abtragen (205) von Metall an einer das Rohrende (113) begrenzenden Rohrkante (147) der Rohrwandungsaußenseite (107) der metallischen Rohrwandung (101) mit einem Schneidwerkzeug, und
Massivumformen (207) des Rohrvorläufers (143) mittels eines Umformwerkzeuges, wobei das metallische Fluidrohr (100) erhalten wird, wobei die Rohrwandung (101) des erhaltenen metallischen Fluidrohrs (100) eine Erhöhung (117) aufweist, welche die Rohrwandungsaußenseite (107) umläuft und von dem Rohrende (113) beabstandet angeordnet ist, wobei die Rohrwandungsaußenseite (107) eine umlaufende Dichtungsgeometrie (119) aufweist, welche ausgebildet ist eine fluiddichte Verbindung zwischen dem metallischen Fluidrohr (100) und einem weiteren fluidführenden Bauteil (301) der Fluidverbindungsanordnung (300) bereitzustellen, und wobei sich die umlaufende Dichtungsgeometrie (119) an der Rohrwandungsaußenseite (107) von der Erhöhung (117) bis zum Rohrende (113) erstreckt, und wobei die umlaufende Dichtungsgeometrie (119) Drehrillen (121) aufweist, welche sich entlang einer Rillenerstreckungsrichtung (123) erstrecken, wobei die Rillenerstreckungsrichtung (123) quer zu einer Längserstreckungsrichtung (111) des Fluidrohrs (100) verläuft.

14. Verfahren (200) nach Anspruch 13, wobei das Verfahren den weiteren Verfahrensschritt umfasst, welcher zwischen dem Abtragen (205) von Metall an der das Rohrende (113) begrenzenden Rohrkante (147) und dem Massivumformen (207) des Rohrvorläufers (143) durchgeführt wird:
Einbringen einer umlaufenden Verjüngung (139) in die Rohrwandungsinnenseite (103) an dem Rohrende (113) durch ein weiteres Schneidwerkzeug, wobei sich die umlaufende Verjüngung (139) von dem Rohrende (113) aus zu einem dem Rohrende (113) beabstandeten Bereich (145) der Rohrwandungsinnenseite (103) erstreckt.

15. Verfahren (200) nach Anspruch 13 oder 14, wobei das Abtragen (203) von Metall an der Rohrwandungsaußenseite (107) der metallischen Rohrwandung (101), das Abtragen (205) von Metall an einer das Rohrende (113) begrenzenden Rohrkante (147), und wobei insbesondere das Einbringen einer umlaufenden Verjüngung (139) in die Rohrwandungsinnenseite (103) an dem Rohrende (113) zeitlich aufeinanderfolgend durch eine Werkzeugvorrichtung durchgeführt wird, welche das Drehwerkzeug (151), das Schneidwerkzeug und insbesondere auch das weitere Schneidwerkzeug umfasst.
